# EUROPÄISCHE PATENTSCHRIFT

(11) **EP 1 838 544 B1**
(45) Veröffentlichungstag und Bekanntmachung des Hinweises auf die Patenterteilung: **17.12.2008**
(21) Anmeldenummer: 06705788.5
(22) Anmeldetag: 16.01.2006
(51) Int. Cl.: B60J 7/22

(54) **FAHRZEUGDACH**
VEHICLE ROOF
TOIT DE VEHICULE

(30) Priorität: 19.01.2005 DE 102005002538
(43) Veröffentlichungstag der Anmeldung: 03.10.2007
(73) Patentinhaber: Webasto AG, 82131 Stockdorf (DE)
(72) Erfinder: BERGMILLER, Alexander, 86343 Königsbrunn (DE); KIEDL, Martin, 80637 München (DE)
(86) Internationale Anmeldenummer: PCT/DE2006/000049
(87) Internationale Veröffentlichungsnummer: WO 2006/076886

(56) Entgegenhaltungen:
- EP-A- 1 245 420
- DE-A1- 3 913 567
- DE-A1- 10 221 501
- DE-A1- 19 701 479
- DE-A1- 19 809 943
- US-A- 6 135 544
- US-A1- 2002 117 876

## Beschreibung

Die Erfindung betrifft ein Fahrzeugdach nach dem Oberbegriff des Patentanspruchs 1, wie beispielsweise in DE 102 32 917 beschrieben wird.

Bei Dachöffnungssystem, wie Schiebedächern oder Hubschiebedächern, die ein Deckelelement zum wahlweisen Öffnen oder Schließen einer Dachöffnung eines Kraftfahrzeugs aufweisen, ist es üblich, im Bereich des vorderen Rands der Dachöffnung einen Windabweiser vorzusehen, der nach dem Öffnen des Deckeleles über die Kontur der Dachhaut hinausragt und den Windfluss beeinflusst, so dass Windgeräusche verringert werden können. Ferner ist es bekannt, den Windabweiser zur weiteren Optimierung der Windgeräusche so auszulegen, dass sein Ausstellschwenkwinkel variabel gewählt werden kann. Beispielsweise kann dann der Ausstellwinkel in Abhängigkeit von der Fahrzeuggeschwindigkeit verändert werden.

Ein Fahrzeugdach der einleitend genannten Gattung ist aus der DE 102 31 169 A1 bekannt und umfasst ein Dachöffnungssystem, das mit einem Deckelelemente zum wahlweisen Verschließen oder mindestens teilweise Freigeben einer Dachöffnung versehen ist. Im vorderen Randbereich der Dachöffnung umfasst das Dachöffnungssystem einen Windabweiser, der ein Windabweiserblatt und zwei seitliche Windabweiserarme aufweist. Die beiden Windabweiserarme sind in Ausstellrichtung vorgespannt, so dass bei einem Zurückziehen des Deckelelementes ein automatisches Ausstellen des Windabweiserblattes erfolgt. Um den Ausstellgrad des Windabweisers variabel halten zu können, ist eine Verstelleinrichtung vorgesehen, die ein in Fahrzeugquerrichtung verfahrbares Schlittenelement umfasst, das über eine Koppelstange und ein Druckelement in Fahrzeugquerrichtung auf ein bandartiges, flexibles Element wirkt, das mit einem Ende an dem Windabweiser und mit dem anderen Ende fahrzeugfest angebunden ist. Durch den Schlitten wird ein Umlenkelement für das flexible Element in Fahrzeugquerrichtung verschoben, wodurch das flexible Element zur Begrenzung des Ausschwenkwinkels des Windabweisers auf den Windabweiser wirkt. Die Mechanik zur Betätigung des als Niederhalter dienenden flexiblen Elementes ist bauraumintensiv und mit einer komplizierten Mechanik versehen.

Ferner sind zur variablen Höheneinstellung eines bei einem Dachöffnungssystem vorgesehenen Windabweisers separate Antriebe bekannt, die beispielsweise einen Schrittmotor und Mechanikwippen mit beweglichen Anschlägen oder auch einen Motor, eine Kulissenmechanik und flexible Bänder als Verbindung zwischen der Mechanik und dem Windabweiserblatt aufweisen. All diese Einstelleinrichtungen sind aufwendig gestaltet und mit einem großen Montageaufwand verbunden.

Der Erfindung liegt die Aufgabe zugrunde, ein Fahrzeugdach der einleitend genannten Gattung zu schaffen, das mit einer Verstelleinrichtung für den Windabweiser versehen ist, die einfach in einen Dachrahmen eines Dachöffnungssystems integrierbar ist.

Diese Aufgabe ist erfindungsgemäß durch das Fahrzeugdach mit den Merkmalen des Patentanspruchs 1 gelöst.

Der Kern der Erfindung besteht mithin darin, die Antriebseinrichtung so auszulegen, dass das zweite Ende des flexiblen Elements mit einer Zugkraft beaufschlagt oder entlastet werden kann und diese Kraft parallel zur Fahrzeuglängsachse gerichtet ist. Eine derart ausgelegte Antriebseinrichtung kann beispielsweise einfach in eine Führungsschiene eines herkömmlichen Dachöffnungssystems integriert werden. Auch das flexible Element erfordert nur einen geringen Bauraum, so dass auch dieses in günstiger Weise im Bereich einer Führungsschiene integrierbar ist. Die Führungsschiene ist insbesondere von einem Rahmenseitenteil eines Dachrahmens des Dachöffnungssystems gebildet. Das Umlenkelement ist fahrzeugfest ausgebildet. Die flexiblen Elemente können in direkter Nachbarschaft zu Windabweiserarmen bzw. zu Ausstellfedern des Windabweisers an diesem angreifen, was eine geringe Deformation des Windabweisers zur Folge hat. Die flexiblen Elemente dienen aufgrund ihrer Wirkung als Niederhalter auch als Höhenanschlag für den Windabweiser, so dass für diese Zwecke keine weiteren Bauteile erforderlich sind.

Vorzugweise ist beidseits eines Windabweiserblattes jeweils eine erfindungsgemäß ausgebildete Verstelleinrichtung mit einem flexiblen Element angeordnet. Grundsätzlich kann das flexible Element sowohl im Trocken- als auch im Nassbereich des Dachöffnungssystems eingesetzt werden, da die hierfür erforderlichen Bauteile unempfindlich auf Feuchtigkeit sind.

Das flexible Element ist beispielsweise aus einem Band, wie einem Gewebeband, einem Seil, einem Draht oder dergleichen gebildet.

Um eine exakte Führung des zweiten Endes des flexiblen Elementes zu erreichen, ist dieses erfindungsgemäß an einem in einer Führungsbahn geführten Gleitelement befestigt. Die Verbindung des flexiblen Elements mit dem beispielsweise als Schlitten ausgeführten Gleitelement kann entweder fest oder auch lösbar ausgebildet sein.

Durch Verschieben des Gleitelements kann die Ausstellhöhe des Windabweisers geändert werden. Die Umlenkung einer horizontalen Gleitelementbewegung in eine Schwenkbewegung des Windabweisers erfolgt mittels des flexiblen Elementes.

Bei einer kostengünstigen Ausführungsform ist die Führungsbahn für das Gleitelement in einem Rahmenseitenteil des Dachrahmens als Gleitkanal ausgebildet. Es sind damit zur Führung des Gleitelements keine weiteren Bauteile an dem Dachrahmen zu befestigen.

Die Antriebseinrichtung für das flexible Element ist vorzugsweise von einem auslaufenden Ende eines Antriebskabels eines Schiebehimmels oder des Deckelelements gebildet. Das auslaufende Ende eines Antriebskabels stellt denjenigen Bereich des Antriebskabels dar, der entfernt zu dem Bereich des Antriebskabels angeordnet ist, der mit dem anzutreibenden Bauteil verbunden ist. In diesem Falle muss kein separater Antrieb für das flexible Element vorgesehen sein. Vielmehr werden zum Antrieb der Verstelleinrichtung ohnehin vorhandene Bauelemente des Dachöffnungssystems genutzt. Alternativ kann auch der Schiebehimmel selbst als Antriebseinrichtung für das flexible Element dienen. Es muss dann nur eine mechanische Wirkverbindung zwischen dem Schiebehimmel und dem flexiblen Element geschaffen werden, so dass Kräfte von dem Schiebehimmel auf den Windabweiser übertragen werden können.

Es ist aber auch denkbar, dass die Verstelleinrichtung mit einem separaten Antrieb, wie einem Linearmotor oder einem mit einer Spindel versehenen Motor versehen ist. In diesem Falle kann die Ausstellbegrenzung für den Windabweiser unabhängig von einer Betätigung des Schiebehimmels oder des Deckelelementes verändert werden.

Wenn die Antriebseinrichtung von dem auslaufenden Ende eines Antriebskabels gebildet ist, ist es vorteilhaft, dieses in einem Kanal zu führen, in den auch das Gleitelement eingreift. Das auslaufende Ende des Antriebskabels wirkt dann auf den in den Kanal eingreifenden Bereich des Gleitelements.

Bei einer bevorzugten Ausführungsform des Fahrzeugdachs nach der Erfindung ist eine Anschlagfeder vorgesehen, die auf das Gleitelement wirkt und die einer Öffnungsfeder für den Windabweiser entgegenwirkt. Die Anschlagfeder ist insbesondere zur Gewährleistung der Funktion der Verstelleinrichtung bzw. des flexiblen Elementes und des Windabweisers erforderlich, wenn ein auslaufendes Ende eines Antriebskabels oder auch der Schiebehimmel als Antriebseinrichtung für die Verstelleinrichtung dienen, da zur Gewährleistung der Funktion keine feste Verbindung zwischen dem Antriebskabel bzw. dem Schiebehimmel einerseits und dem Gleitelement andererseits bestehen darf.

Die Anschlagfeder dient als Wegbegrenzung für das Gleitelement nach vorne. Die Anschlagfeder kann in die Lagerung des Schlittens integriert sein. Die Lagerung der Anschlagfeder kann aber auch direkt in einem Kanal des Rahmenseitenteils, beispielsweise in einem Kanal für das auslaufende Ende eines Antriebskabels, erfolgen. Je nach Bauraumsituation kann die Anschlagfeder als Zug- oder Druckelement ausgeführt sein. Ein solches kann von einer Spiralfeder oder dergleichen gebildet sein.

Wenn die Antriebseinrichtung von dem auslaufenden Ende eines Antriebskabels gebildet ist, wird das Gleitelement mittels des auslaufenden Endes gegen die Kraft der Anschlagfeder nach vorne verschoben, so dass sich der Windabweiser weiter ausstellt. Die Kraft zum Ausstellen des Windabweisers wird von einer herkömmlichen Ausstellfeder für den Windabweiser ausgeübt. Wenn dann das auslaufende Ende des Antriebskabels wieder nach hinten gezogen wird, so wird das Gleitelement durch die Anschlagfeder ebenfalls nach hinten geschoben und der Windabweiser über das flexible Element wieder nach unten geschwenkt. Die Kraft der Anschlagfeder ist größer als die Kraft der Ausstellfeder.

Bei einer speziellen Ausführungsform des Fahrzeugdachs nach der Erfindung erfolgt die Führung des Gleitelementes in einer mit dem Rahmenseitenteil verbundenen Führungseinheit. Diese Führungseinheit kann einfach auf ein herkömmliches Rahmenseitenteil aufgesetzt und an diesem fixiert sein.

Die Führungseinheit für das Gleitelement kann auch einen Gleitkanal für das auslaufende Ende eines Antriebskabels des Dachöffnungssystems aufweisen. Auch kann die Führungseinheit die Anschlagfeder aufnehmen, welche sich dann an einem von der Führungseinheit gebildeten Auflager abstützt.

Ferner kann auch das Umlenkelement für das flexible Element von der aufgesetzten Führungseinheit gebildet sein.

Vorteilhaft ist das Umlenkelement aber ein Quersteg des Dachrahmens. Der Quersteg ist vorzugsweise einen Freischnitt des Dachrahmens gebildet. Der Freischnitt kann beispielsweise einfach durch Bestanzen eingebracht sein. Alternativ kann aber auch ein zusätzliches Bauteil aus Kunststoff, Zinkdruckguss oder dergleichen als Umlenkelement in den Dachrahmen eingebracht sein. Insbesondere kann das Umlenkelement entweder in das Rahmenseitenteil oder das Rahmenvorderteil des Dachrahmens integriert sein.

Das Umlenkelement sollte stets so ausgelegt sein, dass möglichst geringe Reibungskräfte auf das flexible Element wirken und eine definierte Führung des flexiblen Elements an der dem Umlenkelement gewährleistet. Beispielsweise weist das Umlenkelement eine Gleitzone auf, deren Breite derjenigen des flexiblen Elements entspricht.

Um eine einfache Demontage des Windabweisers zu ermöglichen, ist es vorteilhaft, wenn das flexible Element lösbar an dem Windabweiser befestigt ist. Dies kann beispielsweise mittels eines sogenannten Schlüssellochsystems erfolgen.

Die Betätigung der Antriebseinrichtung für das flexible Element kann beispielsweise in Abhängigkeit von der Fahrgeschwindigkeit und/oder auch von dem Öffnungsgrad des Deckelelementes automatisiert erfolgen. Alternativ kann die Ansteuerung des Antriebselementes für das flexible Element aber auch manuell betätigt werden.

Weitere Vorteile und vorteilhafte Ausgestaltungen des Gegenstandes nach der Erfindung sind der Beschreibung, der Zeichnung und den Patentansprüchen entnehmbar.

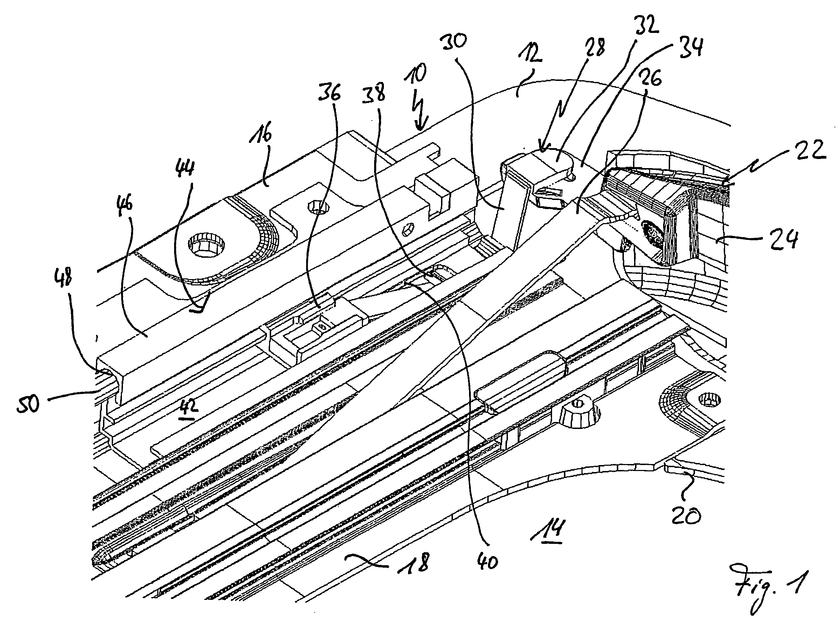

Ein Ausführungsbeispiel eines Dachöffnungssystems eines erfindungsgemäß ausgelegten Fahrzeugdachs ist in der Zeichnung schematisch vereinfacht dargestellt und wird in der nachfolgenden Beschreibung näher erläutert. Es zeigt
- Fig. 1: eine perspektivische Draufsicht auf einen lin- ken vorderen Eckbereich eines Dachrahmens ei- nes Dachöffnungssystems mit einem Windabwei- ser;

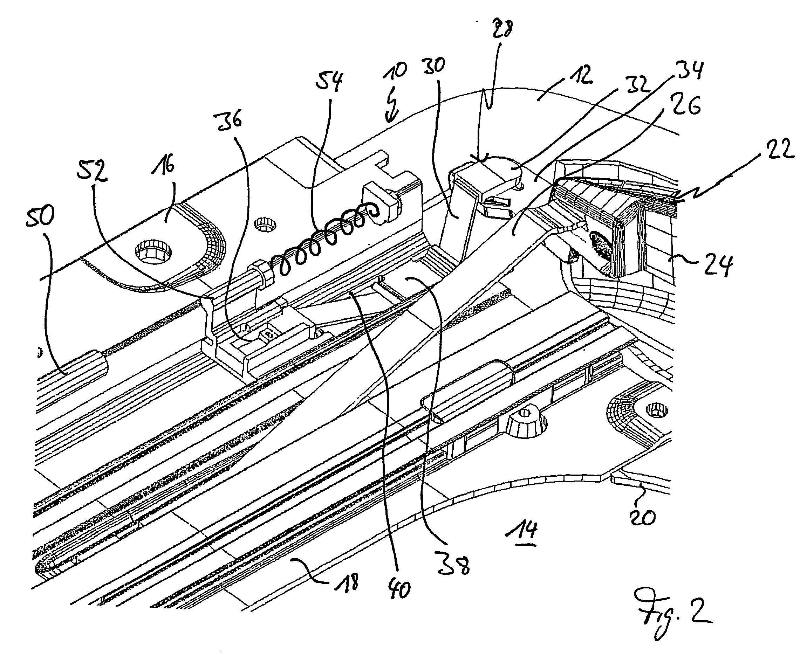

- Fig. 2: eine Fig. 1 entsprechende Ansicht, jedoch ohne Führungseinheit für einen Schlitten;

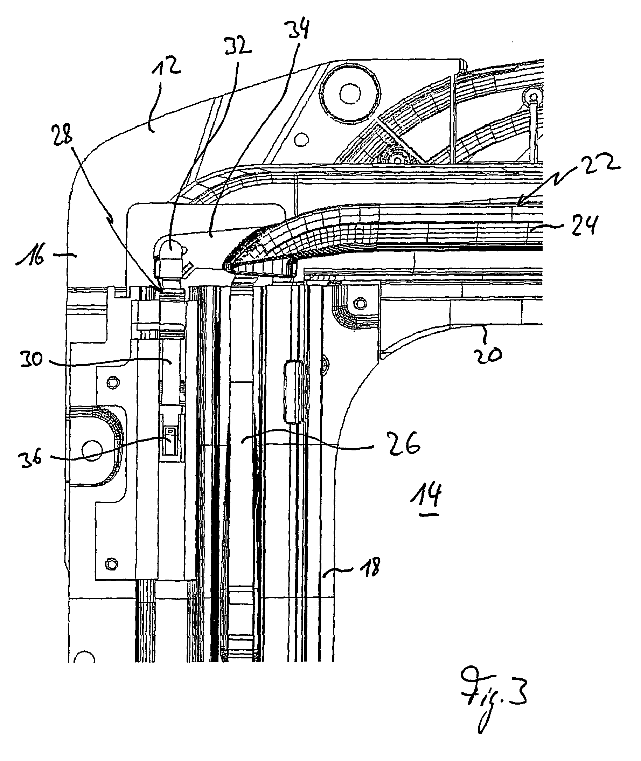

- Fig. 3: eine Draufsicht auf den in Fig. 1 dargestell- ten Eckbereich; und

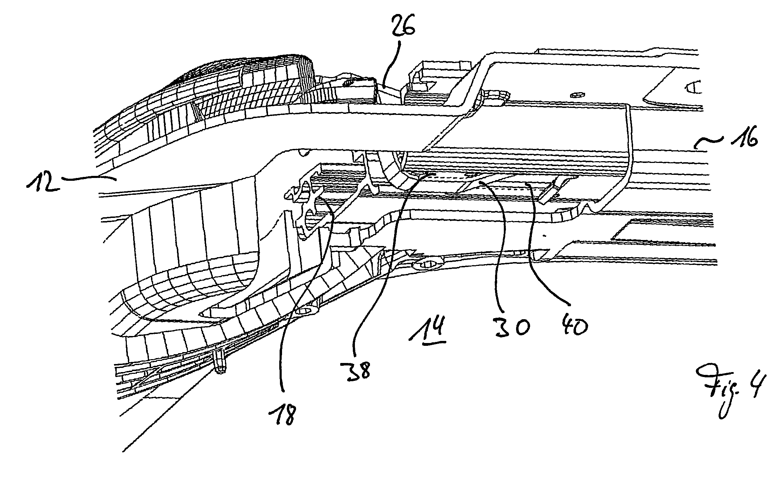

- Fig. 4: eine perspektivische Unteransicht des Eckbe- reichs, wobei der Dachrahmen aus Darstellungs- gründen aufgebrochen ist.

In der Zeichnung ist ein vorderer linker Eckbereich eines Dachrahmens 10 eines bei einem Personenkraftwagen ausgebildeten Schiebedachs oder Schiebehebedachs dargestellt. Der in dem Fachzeugdach integrierte Dachrahmen 10 umfasst ein sogenanntes Rahmenvorderteil 12 und zwei Rahmenseitenteile 16, von denen in der Zeichnung nur das in Fahrtrichtung linke Rahmenseitenteil dargestellt ist und die beidseits einer in einer festen Dachhaut ausgebildeten Dachöffnung 14 ausgebildet sind. Das rechte Rahmenseitenteil ist im Wesentlichen spiegelsymmetrisch zu dem dargestellten linken Rahmenseitenteil 16 ausgebildet.

Die vorliegend verwendeten Begriffe "vorne", "hinten", "links" und "rechts" beziehen sich auf die übliche Vorwärtsfahrtrichtung des Fahrzeugs.

Das Dachöffnungssystem umfasst des weiteren ein hier nicht näher dargestelltes, in üblicher Weise ausgebildetes transparentes Deckelelement zum wahlweisen Verschließen oder mindestens teilweisen Freigeben der Dachöffnung 14. Zum Verstellen des Deckelelements ist im Bereich des Rahmenvorderteils 12 ein Antriebsmotor vorgesehen, der über drucksteife Antriebskabel mit Antriebsschlitten verbunden ist, die beidseits der Dachöffnung 14 in Führungsschienen 18 der Rahmenseitenteile 16 verschiebbar geführt sind und mit dem Deckelelement in Wirkverbindung stehen. Die Verschieberichtung des Deckelelements entspricht der Längsrichtung des mit dem erfindungsgemäß ausgebildeten Fahrzeugdach ausgestatteten Fahrzeugs.

Im vorderen Randbereich 20 der Dachöffnung 14 ist das Dachöffnungssystem mit einem Windabweiser 22 ausgestattet, der ein im Wesentlichen in Fahrzeugquerrichtung ausgerichtetes Windabweiserblatt 24 und seitlich jeweils einen Windabweiserarm 26 umfasst, der gleichzeitig als Ausstellfeder ausgebildet ist, so dass der Windabweiser 22 in Ausstellrichtung federnd vorgespannt ist. Beim Schließen des Deckelelements fährt dieses von hinten auf die Windabweiserarme 26 auf, so dass der Windabweiser 22 entgegen der Kraft der als Ausstellfedern ausgebildeten Windabweiserarme 26 abgesenkt wird. Auf diese Weise wird in Schließstellung des Deckelelements der Windabweiser 22 entgegen der Federvorspannung in seiner Ruhestellung unterhalb des Deckelelements gehalten. Beim Öffnen des Deckelelements werden hingegen die Windabweiserarme 26 freigegeben, so dass der Windabweiser 22 aufgrund der durch die Windabweiserarme 26 ausgeübten Federkraft nach oben schwenken kann. Die Ausstellbewegung des Windabweisers 22 ist durch eine nachstehend näher erläuterte, beidseits des Windabweiserblatts 24 angeordnete Verstelleinrichtung 28 begrenzt, die mithin eine Ausstellbegrenzung darstellt.

Die Verstelleinrichtung 28 umfasst ein Gewebeband 30, das mit seinem vorderen Ende über ein sogenanntes Schlüssellochsystem 32, das mit einer Lagerplatte 34 zusammenwirkt, mit dem Windabweiserblatt 24 lösbar verbunden ist und mit seinem hinteren Ende lösbar an einem Schlitten 36 fixiert ist. Der Schlitten 36 ist in einer Führungsbahn 42 einer Führungseinheit 44 längsverschieblich geführt, die bei der vorliegenden Ausführungsform auf das Rahmenseitenteil 10 aufgesetzt ist. Alternativ könnte der Schlitten 36 auch direkt in der Führungsschiene 18 in einer an dieser geeigneten Führungsbahn geführt sein.

In seinem zwischen dem Schlitten 36 und dem Schlüssellochsystem 32 liegenden Bereich ist das Gewebeband 30 an einem ein Umlenkelement bildenden Quersteg 38 umgelenkt, so dass ein in Fahrzeuglängsrichtung erfolgender Versatz des Schlittens 36 in eine im Wesentlichen vertikal gerichtete Bewegung des vorderen Endes des Gewebebands 30 umgesetzt wird und der Windabweiser 22 so eine Schwenkbewegung erfährt. Der Quersteg 38 ist durch eine Ausstanzung 40 des Rahmenseitenteils 10 gebildet.

Die Führungseinheit 44 umfasst das Weiteren einen von einem Gehäuse 46 gebildeten Gleitkanal für ein auslaufendes Ende 50 eines mit einem Elektromotor in Verbindung stehenden Antriebskabels für einen hier nicht näher dargestellten, in üblicher Weise ausgebildeten Schiebehimmel, der ebenfalls an der Führungsschiene 18 geführt ist. Das auslaufende Ende 50 des Antriebskabels stellt denjenigen Bereich des Antriebskabels dar, der dem mit dem Schiebehimmel verbundenen Bereich des Antriebskabels entfernt angeordnet ist.

In dem Gleitkanal 48 ist des weiteren ein Mitnehmer 52 des Schlittens 36 geführt, der bei vollständig zurückgefahrenem Schiebehimmel mit seiner hinteren Stirnseite an dem auslaufenden Ende 50 des Antriebskabels anliegt. An der dem auslaufenden Ende 50 des Antriebskabels abgewandten Seite des Mitnehmers 52 greift eine als Spiralfeder ausgebildete Anschlagfeder 54 an, die sich mit ihrem dem Mitnehmer 52 abgewandten Ende an einem Auflager 56 abstützt. Die Anschlagfeder 54 hat eine Federkraft, die größer ist als die Federkraft der von dem Windabweiserarm 26 gebildeten Ausstellfeder des Windabweisers 22.

Die Verstelleinrichtung 28 für den Windabweiser 22 arbeitet in nachfolgend beschriebener Weise.

Wenn kein Kontakt zwischen dem als Antriebseinrichtung für das Gewebeband 30 dienenden, auslaufenden Ende 50 des Antriebskabels und dem Mitnehmer 52 des Schlittens 36 besteht, drückt die Anschlagfeder 54 den Schlitten 36 nach hinten, so dass über das Gewebeband 30 eine in vertikaler Richtung wirkende Zugkraft auf den Windabweiser 22 ausgeübt wird, die diesen nach unten zieht, d. h. diesen in Ruheposition hält. Wenn nun das auslaufende Ende 50 des Antriebskabels gegen den Mitnehmer 52 des Schlittens 36 drückt und den Schlitten 36 gegen die Federkraft der Anschlagfeder 54 nach vorne verfährt, wird das Gewebeband 30 entlastet und der Windabweiser 22 durch die Wirkung der als Ausstellfeder wirkenden Windabweiserarme 26 weiter ausgestellt. Je nach Stellung des auslaufenden Endes 50 des Antriebskabels kann so der Ausstellgrad des Windabweisers 22 variiert werden. Das auslaufende Ende 50 des Antriebskabels dient hierbei als Antriebseinrichtung für das ein flexibles Element darstellende Gewebeband 30. Wird nun das auslaufende Ende 50 des Antriebskabels wieder nach hinten gezogen, so wird der Schlitten 36 durch die Federkraft der Anschlagfeder 54 ebenfalls nach hinten verschoben, wodurch der Windabweiser 22 über das Gewebeband 30 wieder nach unten geschwenkt wird.

### Bezugszeichen

- 10: Dachrahmen
- 12: Rahmenvorderteil
- 14: Dachöffnung
- 16: Rahmenseitenteil
- 18: Führungsschiene
- 20: Vorderer Randbereich
- 22: Windabweiser
- 24: Windabweiserblatt
- 26: Windabweiserarm
- 28: Verstelleinrichtung
- 30: Gewebeband
- 32: Schlüssellochsystem
- 34: Lagerplatte
- 36: Schlitten
- 38: Quersteg
- 40: Ausstanzung
- 42: Führungsbahn
- 44: Führungseinheit
- 46: Gehäuse
- 48: Gleitkanal
- 50: Auslaufendes Ende
- 52: Mitnehmer
- 54: Anschlagfeder
- 56: Auflager

## Patentansprüche

1. Fahrzeugdach, mit einem einen Dachrahmen (10) aufweisenden Dachöffnungssystem, das mindestens ein Deckelelement zum wahlweisen Verschließen oder mindestens teilweisen Freigeben einer Dachöffnung (14) aufweist, umfassend einen im vorderen Randbereich der Dachöffnung (14) angeordneten Windabweiser (22), der aus einer abgesenkten Stellung ausschwenkbar ist und in Ausstellrichtung vorgespannt ist, wobei der Ausstellwinkel mittels mindestens einer Verstelleinrichtung (28) veränderbar ist, die ein flexibles Element (30) aufweist, das mit einem ersten Ende an dem Windabweiser (22) befestigt ist und das an einem Umlenkelement (38) so umgelenkt ist, dass eine rechtwinklig zur Ebene des Deckelelementes gerichtete Rückhaltekraft auf den Windabweiser (22) wirkt, wobei ein zweites Ende des flexiblen Elementes mit einer in Fahrzeuglängsrichtung wirkenden Antriebseinrichtung (50) wirkverbunden ist, so dass das zweite Ende des flexiblen Elementes (30) bei Betätigung der Antriebseinrichtung (50) einen Versatz parallel zur Fahrzeuglängsachse erfährt, **dadurch gekennzeichnet, dass** das zweite Ende des flexiblen Elements (30) an einem Gleitelement (36) befestigt ist, das in einer an einem Rahmenseitenteil (16) des Dachrahmens (10) ausgebildeten Führungsbahn (42) geführt ist.

2. Fahrzeugdach nach Anspruch 1, **dadurch gekennzeichnet, dass** das flexible Element (30) aus einem Band, einem Seil oder einem Draht gebildet ist.

3. Fahrzeugdach nach Anspruch 1 oder 2, **dadurch gekennzeichnet, dass** die Antriebseinrichtung von einem auslaufenden Ende (50) eines Antriebskabels des Dachöffnungssystems gebildet ist.

4. Fahrzeugdach nach Anspruch 3, **dadurch gekennzeichnet, dass** das auslaufende Ende (50) des Antriebskabels in einem Kanal (48) geführt ist.

5. Fahrzeugdach nach Anspruch 1 oder 2, **dadurch gekennzeichnet, dass** die Antriebseinrichtung von einem Schiebehimmel gebildet ist.

6. Fahrzeugdach nach einem der Ansprüche 1 bis 5, **gekennzeichnet durch** eine Anschlagfeder (54), die auf das Gleitelement (36) wirkt und einer Ausstellfeder (26) für den Windabweiser (22) entgegenwirkt.

7. Fahrzeugdach nach einem der Ansprüche 1 bis 6, **dadurch gekennzeichnet, dass** das Umlenkelement (38) von einem Quersteg des Dachrahmens gebildet ist.

8. Fahrzeugdach nach einem der Ansprüche 1 bis 7, **dadurch gekennzeichnet, dass** das Gleitelement (36) in einer mit dem Rahmenseitenteil (44) verbundenen Führungseinheit geführt ist.

9. Fahrzeugdach nach Anspruch 8, **dadurch gekennzeichnet, dass** die Führungseinheit (44) einen Gleitkanal (48) für ein auslaufendes Ende (50) eines Antriebskabels des Dachöffnungssystems aufweist.

10. Fahrzeugdach nach Anspruch 8, **dadurch gekennzeichnet, dass** das Umlenkelement von der Führungseinheit gebildet ist.

11. Fahrzeugdach nach einem der Ansprüche 1 bis 10, **dadurch gekennzeichnet, dass** das flexible Element (30) lösbar an dem Windabweiser befestigt ist.

12. Fahrzeugdach nach einem der Ansprüche 1 bis 11, **gekennzeichnet durch** eine fahrzeuggeschwindigkeitsabhängige Ansteuerung der Antriebseinrichtung (28) für die Verstelleinrichtung (28).

## Claims

1. Vehicle roof, with a roof-opening system which has a roof frame (10) and has at least one cover element for optionally closing or at least partially opening up a roof opening (14), the roof opening system comprising a wind deflector (22) which is arranged in the front edge region of the roof opening (14), can be pivoted out from a lowered position and is prestressed in the direction of deployment, wherein the angle of deployment can be changed by means of at least one adjusting device (28) which has a flexible element (30) which is fastened at a first end to the wind deflector (22) and which is deflected on a deflection element (38) in such a manner that a retaining force which is directed at right angles to the plane of the cover element acts on the wind deflector (22), wherein a second end of the flexible element is operatively connected to a driving device (50) acting in the longitudinal direction of the vehicle such that the second end of the flexible element (30) is offset parallel to the longitudinal axis of the vehicle when the driving device (50) is actuated, **characterized in that** the second end of the flexible element (30) is fastened to a sliding element (36) which is guided in a guide track (42) formed on a frame side part (16) of the roof frame (10).

2. Vehicle roof according to Claim 1, **characterized in that** the flexible element (30) is formed from a band, a rope or a wire.

3. Vehicle roof according to Claim 1 or 2, **characterized in that** the driving device is formed by a terminating end (50) of a driving cable of the roof opening system.

4. Vehicle roof according to Claim 3, **characterized in that** the terminating end (50) of the driving cable is guided in a passage (48).

5. Vehicle roof according to Claim 1 or 2, **characterized in that** the driving device is formed by a sliding liner.

6. Vehicle roof according to one of Claims 1 to 5, **characterized by** a stop spring (54) which acts on the sliding element (36) and acts counter to a deployment spring (26) for the wind deflector (22).

7. Vehicle roof according to one of Claims 1 to 6, **characterized in that** the deflection element (38) is formed by a transverse web of the roof frame.

8. Vehicle roof according to one of Claims 1 to 7, **characterized in that** the sliding element (36) is guided in a guide unit connected to the frame side part (44).

9. Vehicle roof according to Claim 8, **characterized in that** the guide unit (44) has a sliding passage (48) for a terminating end (50) of a driving cable of the roof opening system.

10. Vehicle roof according to Claim 8, **characterized in that** the deflection element is formed by the guide unit.

11. Vehicle roof according to one of Claims 1 to 10, **characterized in that** the flexible element (30) is fastened releasably to the wind deflector.

12. Vehicle roof according to one of Claims 1 to 11, **characterized by** an activation of the driving device (28) for the adjusting device (28) as a function of the vehicle speed.

## Revendications

1. Toit de véhicule, avec un système d'ouverture de toit comportant un cadre de toit (10) qui comporte au moins un élément de panneau servant au choix soit à fermer, soit au moins à libérer en partie une ouverture de toit (14), comprenant un déflecteur de vent (22) disposé dans la zone de bordure avant de l'ouverture de toit (14) qui peut pivoter d'une position rentrée et est précontraint dans la direction de déflexion, l'angle de déflexion pouvant être modifié à l'aide d'au moins un dispositif de réglage (28) comportant un élément flexible (30) fixé avec une première extrémité au déflecteur de vent (22) et dérivé de telle sorte qu'au niveau d'un élément de déviation (38), une force de retenue orientée perpendiculairement au plan de l'élément de panneau s'exerce sur le déflecteur de vent (22), une seconde extrémité de l'élément flexible étant reliée à un dispositif d'entraînement (50) agissant dans la direction longitudinale du véhicule, de sorte que la seconde extrémité de l'élément flexible (30) est décalée parallèlement à l'axe longitudinal du véhicule en cas d'actionnement du dispositif d'entraînement (50), **caractérisé en ce que** la seconde extrémité de l'élément flexible (30) est fixée à un élément coulissant (36) guidé dans une glissière de guidage (42) formée dans la partie latérale de cadre (16) du cadre de toit (10).

2. Toit de véhicule selon la revendication 1, **caractérisé en ce que** l'élément flexible (30) est formé par une bande, un câble ou un fil métallique.

3. Toit de véhicule selon la revendication 1 ou 2, **caractérisé en ce que** le dispositif d'entraînement est formé par une extrémité (50) sortante d'un câble d'entraînement du système d'ouverture de toit.

4. Toit de véhicule selon la revendication 3, **caractérisé en ce que** l'extrémité (50) sortante du câble d'entraînement est guidée dans un canal (48).

5. Toit de véhicule selon la revendication 1 ou 2, **caractérisé en ce que** le dispositif d'entraînement est formé par un habillage coulissant.

6. Toit de véhicule selon l'une quelconque des revendications 1 à 5, **caractérisé par** un ressort de butée (54) qui agit sur l'élément coulissant (36) et s'oppose à un ressort de déflexion (26) du déflecteur de vent (22).

7. Toit de véhicule selon l'une quelconque des revendications 1 à 6, **caractérisé en ce que** l'élément de déviation (38) est formé par une traverse du cadre de toit.

8. Toit de véhicule selon l'une quelconque des revendications 1 à 7, **caractérisé en ce que** l'élément coulissant (36) est guidé dans une unité de guidage reliée à la partie latérale de cadre (44).

9. Toit de véhicule selon la revendication 8, **caractérisé en ce que** l'unité de guidage (44) comporte un canal de glissement (48) pour une extrémité (50) sortante d'un câble d'entraînement du système d'ouverture de toit.

10. Toit de véhicule selon la revendication 8, **caractérisé en ce que** l'élément de déviation est formé par l'unité de guidage.

11. Toit de véhicule selon l'une quelconque des revendications 1 à 10, **caractérisé en ce que** l'élément flexible (30) est fixé de façon amovible au déflecteur de vent.

12. Toit de véhicule selon l'une quelconque des revendications 1 à 11, **caractérisé par** une excitation en fonction de la vitesse du véhicule du dispositif d'entraînement (28) du dispositif de réglage (28).
